# EUROPÄISCHE PATENTSCHRIFT

(11) **EP 1 210 567 B1**
(45) Veröffentlichungstag und Bekanntmachung des Hinweises auf die Patenterteilung: **27.07.2011**
(21) Anmeldenummer: 99944620.6
(22) Anmeldetag: 07.09.1999
(51) Int. Cl.: G01F 23/00

(54) **Vorrichtung zur Bestimmung des Füllstands eines Mediums**
Device for determining the fill-level of a medium
Dispositif permettant de déterminer le niveau de remplissage d'un milieu

(43) Veröffentlichungstag der Anmeldung: 05.06.2002
(73) Patentinhaber: Endress + Hauser GmbH + Co. KG, 79689 Maulburg (DE)
(72) Erfinder: STRÜTT, Bernd, D-79585 Steinen (DE); MICHALSKI, Bernhard, D-79689 Maulburg (DE)
(74) Vertreter: Andres, Angelika Maria
(86) Internationale Anmeldenummer: PCT/EP1999/006585
(87) Internationale Veröffentlichungsnummer: WO 2001/018502

(56) Entgegenhaltungen:
- EP-A- 0 340 953
- GB-A- 2 300 265
- US-A- 4 718 025
- US-A- 4 847 623

## Beschreibung

Die Erfindung bezieht sich auf eine Vorrichtung zur Bestimmung des Füllstands eines Mediums. Im Zusammenhang mit der vorliegenden Erfindung ist unter dem Begriff 'physikalische Prozeßgröße' der Füllstand eines Mediums in einem Behälter zu verstehen.

Sowohl beim 'echten Radarverfahren' als auch beim TDR-Verfahren werden Meßsignale in Richtung der Oberfläche des Mediums ausgesendet und an der Oberfläche des Mediums zumindest teilweise als sog. Echosignale reflektiert. Die reflektierten Echosignale werden detektiert und über ein Laufzeitverfahren ausgewertet. Der wesentliche Unterschied zwischen dem echten Radarverfahren und dem TDR-Verfahren ist darin zu sehen, daß im ersten Falle die elektromagnetischen Wellen bzw. die Schall- oder Ultraschallwellen frei abgestrahlt werden, während sich die elektromagnetischen oder akustischen Meßsignale beim TDR-Verfahren gezielt längs eines die Meßsignale führenden Elements ausbreiten. TDR ist übrigens eine Abkürzung für Time Domain Reflectometry. Durch Auswertung der Amplitudenwerte und eventuell der Phasenwerte der Echosignale wird dann der Füllstand in dem Behälter über ein Laufzeitverfahren ermittelt. Angewendet werden kann sowohl das Pulsradar-Verfahren, bei dem die Echosignale gepulst abgestrahlt werden, als auch das FMCW-Verfahren, bei dem kontinuierliche Wellen periodisch linear, z. B. mit einer Sägezahnspannung, frequenzmoduliert sind. Beim TDR-Verfahren werden üblicherweise steilflankige Delta-Pulse auf das leitfähige Element gegeben.

Laufzeitverfahren nutzen die physikalische Gesetzmäßigkeit aus, wonach die Laufstrecke gleich dem Produkt aus Laufzeit und Ausbreitungsgeschwindigkeit ist. Im Falle der Füllstandsmessung entspricht die Laufstrecke dem doppelten Abstand zwischen Antenne und Oberfläche des Füllguts. Das eigentliche Nutzechosignal und dessen Laufzeit werden üblicherweise anhand der sog. Echofunktion bzw. der digitalen Hüllkurve bestimmt, wobei die Hüllkurve die Amplituden der Echosignale als Funkton des Abstandes 'Antenne - Oberfläche des Füllguts' wiedergibt. Der Füllstand selbst ergibt sich dann aus der Differenz zwischen dem bekannten Abstand der Antenne von dem Boden des Behälters und dem durch die Messung bestimmten Abstand der Oberfläche des Füllguts von der Antenne. Analoge Überlegungen gelten bei der Bestimmung des Masse-Durchflusses durch eine Leitung.

Geräte der zuvorgenannten Art werden von der Anmelderin im Bereich der Füllstandsmessung und der Durchflußmessung hergestellt und vertrieben. So steht die Produktbezeichnung 'Mikropilot' für einen Sensor, der Mikrowellen frei abstrahlt; 'Prosonic' bzw. 'Prosonic Flow' kennzeichnen Sensoren, die auf der Basis von Ultraschallwellen arbeiten, und 'Levelflex' bezeichnet einen TDR-Sensor.

Der Erfindung liegt die Aufgabe zugrunde, eine Vorrichtung vorzuschlagen, die in Verbindung mit unterschiedlichen Sensoren einsetzbar ist, wobei den Sensoren gemeinsam ist, daß sie den Füllstand mittels eines Laufzeitverfahrens ermitteln.

Die Aufgabe wird durch die Merkmale des Anspruchs 1 gelöst. Durch die geschickte Aufteilung der einzelnen Komponenten des Sensor wird so erfindungsgemäß einmal erreicht, daß beispielsweise nur noch eine Auswerteeinheit universell für beliebige auf dem Laufzeitverfahren basierende Sensoren einsetzbar ist. Auch die Applikationseinheit ist weitgehend universell einsetzbar ausgestaltet und zeigt gleichfalls nur geringfügige, vom jeweils verwendeten Sensor abhängige Abweichungen auf.

Gemäß einer vorteilhaften Ausgestaltung der erfindungsgemäßen Vorrichtung ist vorgesehen, daß eine von dem jeweils verwendeten Sensor unabhängige Kommunikationseinheit für den Datenaustausch mit einer entfernten Prozeßleitstelle vorgesehen ist. Neben der für alle gängigen Sensortypen im Bereich der berührungslosen Füllstands- bzw. Durchflußmessung im wesentlichen einheitlichen Applikations- und Auswerteeinheit vereinheitlicht diese Ausgestaltung auch den Bereich, der die Kommunikation zwischen Sensor und einer entfernten Prozeßleitstelle betrifft.

Vorzugsweise sind gemäß einer bevorzugten Ausgestaltung der erfindungsgemäßen Vorrichtung die Kommunikationseinheit und die Prozeßleitstelle über einen seriellen Bus verbunden, wobei die Kommunikationseinheit Schnittstellen aufweist, die für den Datenaustausch mittels unterschiedlicher Übertragungsstandards konfiguriert sind. Als Beispiele für derartige Übertragungsstandards sind der Profibus PA, das Fieldbus Foundation Protokoll oder das HART-Protokoll zu nennen.

Wie bereits an vorhergehender Stelle erwähnt, handelt es sich beidem sensor um einen Sensor, der elektromagnetische Wellen oder akustische Wellen frei oder über ein leitendes Element in Richtung des Mediums abstrahlt oder in Richtung des Mediums führt. Der Applikationseinheit ist erfindungsgemäß ein Hochfrequenzmodul zugeordnet , das die hochfrequenten Meßsignale erzeugt und anschließend in den niederfrequenten Meßbereich transformiert. Hierbei ist , das Hochfrequenzmodul Teil der sensorspezifischen Applikationseinheit.

Der Vorteil der Transformation der hochfrequenten Meßsignale in den niederfrequenten Bereich ist darin zu sehen, daß relativ langsame und somit kostengünstige elektronische Bauteile zur Signalerfassung und/oder Signalauswertung verwendet werden können. Unabdingbare Voraussetzung der Zeitdehnung bzw. Zeitverzögerung mittels sequentieller Abtastung ist eine konstante Zeitdifferenz zwischen zwei aufeinanderfolgenden Abtastpunkten. Bekannte Verfahren, die diese Voraussetzung erfüllen, basieren auf dem Mischerprinzip und dem Rampenprinzip.

Im Rahmen der erfindungsgemäßen Vorrichtung ist die Applikationseinheit für alle Sensortypen einheitlich ausgestaltet

Wie bereits an vorhergehender Stelle erwähnt, handelt es sich bei der zu messenden Prozeßgröße um den Füllstand eines Mediums in einem Behälter

Erfindungsgemäß ist jeweils an der sensorspezifischen Applikationseinheit eine Schnittstelle vorgesehen, über die im Falle eines Ultraschallsensors die Sendefrequenz und die Sendeimpulsdauer an die Sendeeinheit übertragen werden; im Falle eines Mikrowellensensors oder eines Sensors, der die Mikrowellen mittels eines leitenden Elements in Richtung des Mediums führt, wird über die Schnittstelle das Hochfrequenzmodul angesteuert.

Um Speicherplatz und Rechenzeit einzusparen sieht eine bevorzugte Ausgestaltung der erfindungsgemäßen Vorrichtung vor, daß die Auswerteeinheit die durch das Medium beeinflußten Meßsignale innerhalb eines ersten Meßbereichs mit einer ersten Abtastfrequenz abtastet, wobei die erste Abtastfrequenz eine erste Distanzauflösung der durch das Medium beeinflußten Meßsignale definiert, und daß die Auswerteeinheit die durch das Medium beeinflußten Meßsignale innerhalb zumindest eines zweiten Meßbereichs mit einer zweiten Abtastfrequenz abtastet, wobei die zweite Abtastfrequenz einer zweiten Distanzauflösung der durch das Medium beeinflußten Meßsignale entspricht und wobei die Meßbereiche und die Abtastfrequenzen derart gewählt werden, daß die folgenden beiden Bedingungen gleichzeitig erfüllt sind: Der zweite Meßbereich ist ein Teilbereich des ersten Meßbereiches, und die zweite Abtastfrequenz ist größer als die erste Abtastfrequenz.

Weiterhin ist vorgesehen, daß die Auswerteeinheit zur Bestimmung des Füllstandes des Mediums in dem Behälter ein Nutzechosignal, das den an der Oberfläche des Mediums reflektierten Anteil des Meßsignals repräsentiert, in bezug auf ein systemabhängiges Referenzechosignal auswertet, wobei das systemabhängige Referenzsignal den Anteil des Meßsignals repräsentiert, der aufgrund von Reflexionen beim Übergang auf die Sendeeinheit oder innerhalb der Sendeeinheit auftritt.

Eine vorteilhafte Ausgestaltung der erfindungsgemäßen Vorrichtung schlägt darüber hinaus vor, daß die Auswerteeinheit als ersten Meßbereich den gesamten Meßbereich wählt, wobei der gesamte Meßbereich den Bereich zwischen dem minimalen Füllstand und dem maximalen Füllstand des Mediums in dem Behälter umfaßt, und daß die Auswerteeinheit als weitere Meßbereiche zumindest einen ausgewählten Bereich in der Umgebung des Nutz-Echosignals und des Referenzechosignal heranzieht.

Eine Gesamtbereichsmessung ist sinnvoll, um einen Überblick über den Gesamtbereich zu erhalten und so auch alle Echosignale, insbesondere auch die Störechosignale, zu erfassen. Sie bietet sich darüber hinaus auch dann an, wenn sich z. B. im Rahmen der Füllstandsmessung die Oberfläche des Mediums stark bewegt und sich der Füllstand schnell ändert. Die hochauflösende Messung innerhalb eines Teilbereichs dient dazu, bei ruhiger Füllstandsoberfläche die Distanzauflösung zu steigern und so - wiederum bezogen auf die Füllstandsmessung - sehr genaue Angaben über den jeweiligen Füllstand des Mediums in dem Behälter zu machen. Natürlich kann beliebig zwischen den beiden Meßprinzipien hin- und hergesprungen werden:
Ist die Oberfläche im wesentlichen ruhig, so wird die Teilbereichsmessung herangezogen; ist die Oberfläche bewegt, wo kommt vermehrt die Gesamtbereichsmessung zum Einsatz.

Die Erfindung wird anhand der nachfolgenden Figuren näher erläutert. Es zeigt:
Fig. 1: eine schematische Darstellung der einzelnen Komponenten einer vorteilhaften Ausgestaltung der erfindungsgemäßen Vorrichtung und
Fig. 2: ein Blockschaltbild einer bevorzugten Ausführungsform der erfindungsgemäßen Vorrichtung.

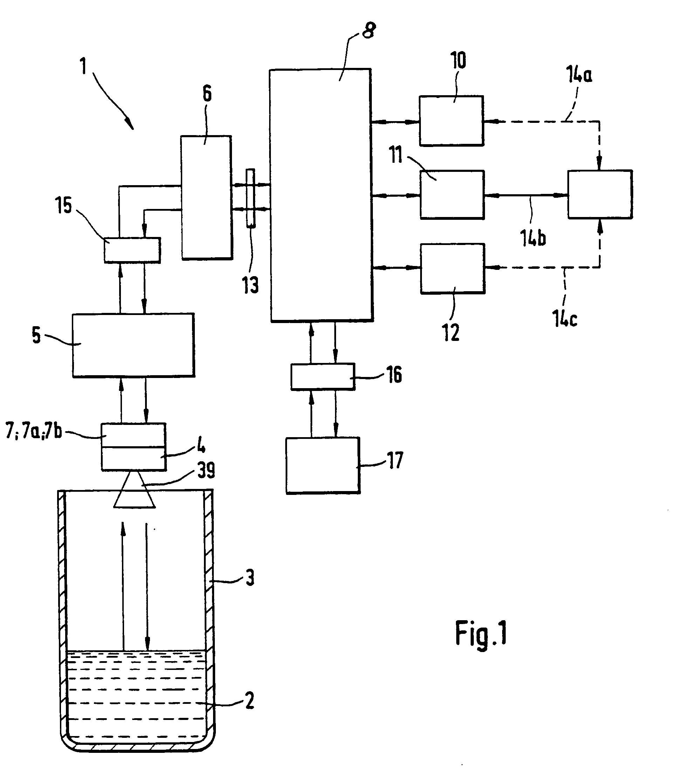

Fig. 1 zeigt eine schematische Darstellung der einzelnen Komponenten einer vorteilhaften Ausgestaltung der erfindungsgemäßen Vorrichtung, die zur Füllstandsmessung herangezogen wird. Das Medium 2 ist in einem Behälter 3 angeordnet. Oberhalb des maximal möglichen Füllstandes des Mediums 2 in dem Behälter 3 ist der Sensor 4 angeordnet, der die Meßsignale über die Antenne 39 frei in Richtung der Oberfläche des Mediums 2 abstrahlt. Das Aussenden und Empfangen der Meß- und Echosignale erfolgt über die Sende-/Empfangseinheit 7; 7a, 7b. Mit der Sende-/Empfangseinheit 7 verbunden ist die Applikationseinheit 5, die üblicherweise einen auf den jeweils verwendeten Sensor 4 abgestimmten Aufbau aufweist.

Über die Schnittstelle 'Applikationseinheit-Auswerteeinheit' 15 ist die Applikationseinheit 5 mit der Auswerteeinheit 6 verbunden. Diese Auswerteeinheit 6 weist unabhängig von dem jeweils eingesetzten Sensortypen 4 einen einheitlichen Aufbau auf. In der Auswerteeinheit 6 wird anhand der empfangenen Echosignale der momentane Füllstand in dem Behälter 3 bestimmt. Über die Schnittstelle 'Auswerteeinheit-Kommunikationseinheit' 13 ist die Auswerteeinheit 6 mit der Kommunikationseinheit 8 verbunden. Diese Schnittstelle 13 ist für alle im Zusammenhang mit der vorliegenden Erfindung verwendbaren Sensortypen gleich. Über die Schnittstelle 13 werden von der Kommunikationseinheit 8 die Betriebsvariablen, die für das Auffinden des Echosignals und die Auswertung der Meßsignale relevant sind, an die

Auswerteeinheit 6 weitergegeben. Die Kommunikationseinheit 8 erhält die Betriebsvariablen entweder über die Anzeige-/Eingabeeinheit 17 oder über eine Schnittstelle 10, 11, 12 von der Prozeßleitstelle 9. Bei diesen Betriebsvariablen handelt es sich beispielsweise um den minimalen und maximalen Meßbereich, die Distanzauflösung oder die Filtervariablen. Die Auswerteeinheit 6 gibt z. B. berechnete und standardisierte Füllstandsdaten über die Schnittstelle 13 an die Kommunikationseinheit 8 weiter.

Neben der Aufrechterhaltung sämtlicher Kommunikationsaufgaben ist es auch die Aufgabe der Kommunikationseinheit 8 weitere Aktivitäten bereitzustellen, die unterschiedlichen Meßprinzipien einheitlich anwendbar sind. Bei diesen Aktivitäten handelt es sich beispielsweise um die Umrechnung in verschiedene Einheiten, die Linearisierung, Fehlermeldungen, Grenzwertmeldungen, Stromausgangsansteurung, usw.

Die Kommunikationseinheit 8 kommuniziert über den seriellen Bus 14a; 14b; 14c mit der Prozeßleitstelle 9. Die Kommunikationseinheit 8 ist einheitlich so konfiguriert, daß sie mit der entfernten Prozeßleitstelle 9 je nach ausgewählter Schnittstelle 14a, 14b, 14c mittels unterschiedlicher Übertragungsstandards 10, 11, 12 kommunizieren kann. Bei den Übertragungsstandards handelt es sich im dargestellten Fall um den ProfiBus PA 10, das HART Protokoll 11 oder das FieldBus Foundation Protokoll 12. Im gezeigten Fall erfolgt die Kommunikation übrigens über das Hart Protokoll 11.

Über die Schnittstelle 'Kommunikationseinheit-Anzeigeeinheit' 16 ist die Kommunikationseinheit 8 mit einer Anzeige-/Eingabeeinheit 17 verbindbar. Mittels der Anzeige-/Eingabeeinheit 17 kann das Bedienpersonal sich Prozeßgrößen anzeigen lassen, oder Konfigurationsänderungen an dem System vornehmen.

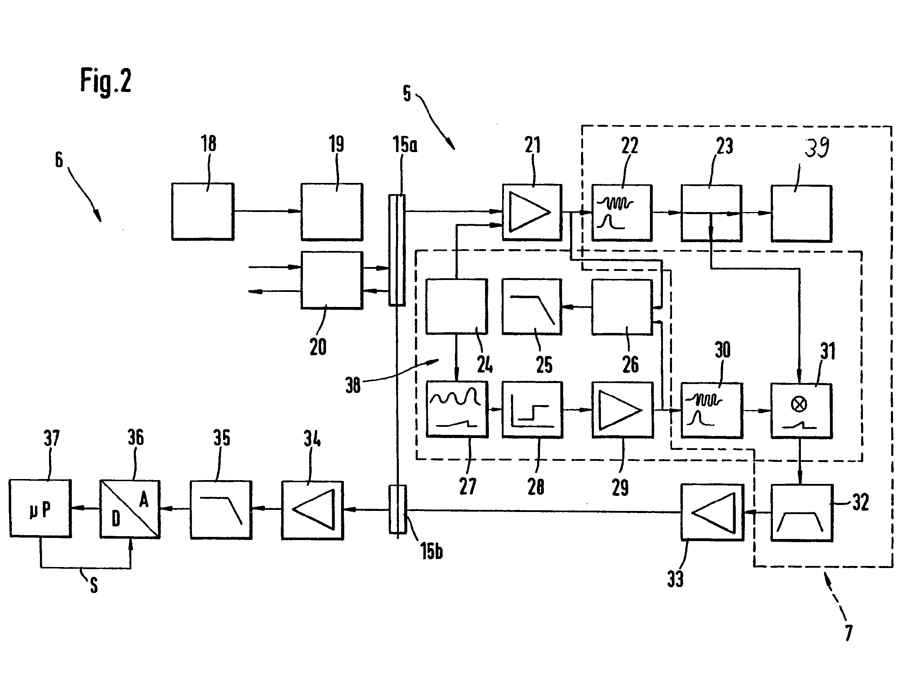

Fig. 2: ein Blockschaltbild der Applikationseinheit 5 und der Auswerteeinheit 6 gemäß einer bevorzugten Ausführungsform der erfindungsgemäßen Vorrichtung. Die Applikationseinheit 5 und die Auswerteeinheit 6 sind über die Schnittstelle 15; 15a, 15b miteinander verbunden. Erfindungsgemäß wird die Steuerung der Meßsignale durch eine für unterschiedliche Sensoren 4 gleich ausgelegte Schnittstelle 15 vorgenommen. Wird als Sensor 4 ein Ultraschallsensor eingesetzt, so können die niederfrequenten Signale, die von der Zeitgeberschaltung 18 und die Steuerschaltung 19 erzeugt und bereitgestellt werden, direkt von der Applikationseinheit 5 weiterverarbeitet werden. Das von den elektronischen Bauteilen 18, 19 zur Verfügung gestellte Steuersignal enthält bereits die Sendefrequenz und die Sendeimpulsdauer.

Da im Falle der Verwendung eines Mikrowellensensors die Meßsignale im GHz-Bereich liegen, werden aus den zuvorgenannten Gründen die Meßsignale in den Niederfrequenzbereich transformiert. Hierzu wird über die Steuereinheit 20 und die Schnittstelle 15a das Hochfrequenzmodul 38 digital ein- und ausgeschaltet. Die eigentliche Sendefrequenz wird im Hochfrequenzmodul 38 erzeugt. Um zu signalisieren, daß das Hochfrequenzmodul 38 nach dem Einschalten meßbereit ist, wird ein digitales Signal zurückgeführt, das zur Synchronisierung und dem Start des Einlesezyklus' genutzt wird. Das Hochfrequenzmodul wird später noch ausführlich beschrieben.

Je nach verwendetem Sensor 4 ist die Applikationseinheit 5 nun unterschiedlich konfiguriert. Betrachten wir zuerst den Fall, daß ein Ultraschallsensor an die erfindungsgemäße Vorrichtung angeschlossen ist. Angesteuert über die Schnittstelle 15 werden die im kHz-Bereich liegenden Meßsignale auf die Treiberschaltung 21 gegeben. Über den Signalformer 22 und die Sende-/Empfangsweiche 23 werden die Meßsignale auf die Antenne 39 gegeben und von dort in Richtung des Mediums 2, dessen Prozeßgröße bestimmt werden soll, ausgesendet. Der Sende-/Empfangsweiche 23 kommt dabei die Aufgabe zu, die Empfangsschaltung 7b vor zu hoher Sendeimpulsspannung zu schützen und eine Impedanzanpassung zwischen dem Sensor 4 und der Empfangsschaltung 7b vorzunehmen. Im Falle eines Mikrowellensensors und eines TDR-Sensors gibt es übrigens neben der Sende-/Empfangsweiche 23 zusätzlich eine Impedanzanpassung.

Die abgetasteten Echosignale werden über den Bandpaßfilter 32 und den Verstärker 33 über die Schnittstelle 'Applikationseinheit-Auswerteeinheit' 15b der Auswerteeinheit 6 zugeleitet. Wie bereits an vorhergehender Stelle beschrieben, ist die Auswerteeinheit 6 derart konfiguriert, daß sie für alle möglichen auf einer Laufzeitauswertung Verfahren nahezu identisch ist. Nahezu bedeutet hier, daß im Falle von TDR-Meßsignalen auf den Logarithmierer 34 verzichtet werden kann. Der Grund hierfür ist, daß sowohl die frei abgestrahlten Ultraschall-Meßsignale als auch die frei abgestrahlten Mikrowellen-Meßsignale infolge der relativ starken Dämpfung in Luft einen hohen Dynamikbereich aufweisen.

Nachdem die Ultraschall-Meßsignale logarithmiert worden sind, werden sie über das Tiefpaßfilter 35 einem Analog/Digital-Wandler 36 zugeführt. Die digitalisierten Meßdaten werden dem µProzessor 37 zugeführt, der anhand der Meßdaten nach einem der hinlänglich bekannten Auswerteverfahren, z. B. über die Hüllkurven-Auswertung, den Füllstand des Mediums 2 in dem Behälter 3 bestimmt.

Wie bereits zuvor erwähnt, werden hochfrequente Meßsignale in den Niederfrequenzbereich transformiert. Die Transformation wird von dem Hochfrequenzmodul 38 ausgeführt. Das Hochfrequenzmodul 38 setzt sich im gezeigten Beispiel aus folgenden Komponenten zusammen: einer Signalerzeugungseinheit 24, einem Tiefpaßfilter 25, einer Kompensationsschaltung 26, einem Oszillator/Sägezahngenerator 27, einer Verzögerungsschaltung 28, einem Verstärker 29, einem Signalformer 30 und einem Mischer bzw. einer Abtast-und Halteschaltung 31. Wesentlicher Bestandteil des Hochfrequenzmoduls 38 ist die Zeitverzögerungsschaltung 28, an deren Eingang der Sendetakt anliegt, der von der Signalerzeugungseinheit 24 und der Steuereinheit 20 bereitgestellt wird. Ein im Zusammenhang mit der vorliegenden Erfindung verwendbares Hochfrequenzmodul ist beispielsweise aus der DE 29 23 963 bekannt geworden.

Der Sägezahngenerator 27 ist im gezeigten Fall mit einem konstanten 'Zeitdehnungsfaktor' eingestellt. Dieser ergibt sich anhand der Steigung des Sägezahns bzw. anhand der Oszillatorfrequenz. Der Zeitdehnungsfaktor ist zwar je nach verwendetem Meßprinzip unterschiedlich, allerdings ist er immer konstant. Das Verfahren mit variablem Sägezahngenerator ist gleichfalls möglich, um die Teilbereichsmessung mit variabler Meßauflösung zu realisieren; allerdings ist dieses Verfahren nur in Verbindung mit einem TDR-Sensor und einem Mikrowellen-Sensor anwendbar. Für Ultraschall müßte ein hiervon abweichendes Verfahren gewählt werden, was dem Grundgedanken der vorliegenden Erfindung, nämlich eine maximal mögliche Vereinheitlichung herbeizuführen, entgegenlaufen würde.

Um dieses Problem zu umgehen, werden für die Hochfrequenz-Meßverfahren konstante Zeitdehnungsfaktoren gewählt. Um weiterhin alle Meßverfahren gleich behandeln zu können, wird die Einstellung der Abtastrate und des Meßbereichs mit der Ansteuerung des A/D-Wandlers 36 jeweils im Niederfrequenzbereich vorgenommen. Die Einstellung erfolgt mittels eines Ansteuersignals S vom µProzessor 37 zum A/D-Wandler 36.

Die abgetasteten Echosignale werden über einen Verstärker 29 und den Signalformer 30 auf einen ersten Eingang der Abtast-/Halteschaltung 31 bzw. den Mixer 31 gegeben. Die reflektierten Echosignale liegen über die Sende-/Empfangsweiche 23 an einem zweiten Eingang der Abtast- und Halteschaltung 31 an.

Im Betrieb werden vorzugsweise periodisch mit der Sendetaktfrequenz Meßsignale erzeugt; die reflektierten Echosignale werden der Abtast- und Halteschaltung 31 zugeführt. Dort wird jedem Echosignal ein Abtastimpuls überlagert und ein daraus resultierendes Gesamtsignal aufgenommen. Das Gesamtsignal wird mittels eines nachgeschalteten Bandpasses 32 gefiltert und mittels des Verstärkers 33 verstärkt. Über die Schnittstelle 15b werden die Gesamtsignale der einheitlich konfigurierten Auswerteeinheit 6 zugeleitet.

### Bezugszeichenliste

- 1: erfindungsgemäße Vorrichtung
- 2: Medium
- 3: Behälter
- 4: Sensor
- 5: Applikationseinheit
- 6: Auswerteeinheit
- 7: Sende-/Empfangseinheit
- 8: Kommunikationseinheit
- 9: Prozeßleitstelle
- 10: ProfiBus PA
- 11: HART Modem
- 12: Fieldbus Foundation CPU
- 13: interne Schnittstelle 'Auswerteeinheit-Kommunikationseinheit'
- 14: serieller Bus
- 15: Schnittstelle 'Applikationseinheit-Auswerteeinheit
- 16: Schnittstelle 'Kommunikationseinheit-Anzeige-/Eingabeeinheit
- 17: Anzeige-/Eingabeeinheit
- 18: Zeitgeberschaltung
- 19: Torschaltung
- 20: Steuereinheit
- 21: Treiberschaltung
- 22: Signalformer
- 23: Sende-/Empfangsweiche
- 24: Signalerzeugungseinheit
- 25: Tiefpaßfilter
- 26: Kompensationsschaltung
- 27: Oszillator/Sägezahngenerator
- 28: Verzögerungsschaltung
- 29: Treiberschaltung
- 30: Signalformer
- 31: Mischer/Abtast-und Halteschaltung
- 32: Bandpaßfilter/Tiefpaßfilter
- 33: Verstärker
- 34: Logarithmierer
- 35: Tiefpaßfilter
- 36: A/D Wandler
- 37: µ Prozessor
- 38: Hochfrequenzmodul
- 39: Antenne

## Patentansprüche

1. Vorrichtung zur Bestimmung des Füllstandes eines Mediums (2) in einem Behälter mittels akustischer oder elektromagnetischer Messsignale, wobei die Vorrichtung umfasst: einen Ultraschallsensor oder einen Mikrowellensensor, eine Sende-/Empfangseinheit (7), eine Applikationseinheit (5), eine Auswerteeinheit (6), eine Schnittstelle (15) zwischen der Applikationseinheit (5) und der Auswerteeinheit (6), ein Hochfrequenzmodul (38), eine Zeitgeberschaltung (18), eine Torschaltung (19) und eine Steuereinheit (20), wobei die Sende-/Empfangseinheit (7) die Messsignale in Richtung des Mediums (2) abstrahlt und die durch die Wechselwirkung mit dem Medium (2) beeinflussten Messsignalen empfängt, wobei die Sende-/Empfangseinheit (7) und das Hochfrequenzmodul (38), das dazu eingerichtet ist, hochfrequente Messsignale zu erzeugen und in den niederfrequenten Messbereich zu transformieren, Teile der Applikationseinheit (5) sind, wobei die Zeitgeberschaltung (18) und die Torschaltung (19) dazu eingerichtet sind, bei Verwendung des Ultraschallsensors die Sendefrequenz und die Sendeimpulsdauer über die Schnittstelle (15) an die Applikationseinheit (5) zu übertragen, wobei die Steuereinheit (20) dazu eingerichtet ist, bei Verwendung des Mikrowellensensors das Hochfrequenzmodul (38) über die Schnittstelle (15) digital ein- und auszuschalten, und wobei die Auswerteeinheit (6) so ausgestaltet ist, dass sie den Füllstand des Mediums (2) in dem Behälter anhand der von der Applikationseinheit (5) gelieferten Messsignale über einen einheitlichen Auswerte-Algorithmus bestimmt.

2. Vorrichtung nach Anspruch 1,
wobei eine von dem jeweils verwendeten Sensor (4) unabhängige Kommunikationseinheit (8) für den Datenaustausch mit einer entfernten Prozessleitstelle (9) vorgesehen ist.

3. Vorrichtung nach Anspruch 2,
wobei die Kommunikationseinheit (8) mit der Prozessleitstelle (9) über einen seriellen Bus (13) kommuniziert und
wobei die Kommunikationseinheit (8) für den Datenaustausch mittels unterschiedlicher Übertragungsstandards (10, 11, 12) konfiguriert ist.

4. Vorrichtung nach 1,
wobei die Auswerteeinheit (6) die durch das Medium (2) beeinflussten Messsignale innerhalb eines ersten Messbereichs (M1) mit einer ersten Abtastfrequenz (F1) abtastet, wobei die erste Abtastfrequenz (F1) eine erste Distanzauflösung (A1) der durch das Medium (2) beeinflussten Messsignale definiert, und
wobei die Auswerteeinheit (6) die durch das Medium (2) beeinflussten Messsignale innerhalb zumindest eines zweiten Messbereichs (M2) mit einer zweiten Abtastfrequenz (F2) abtastet, wobei die zweite Abtastfrequenz (F2) einer zweiten Distanzauflösung (A2) der durch das Medium (2) beeinflussten Messsignale entspricht und wobei die Messbereiche (M1, M2) und die Abtastfrequenzen (F1, F2) derart gewählt werden, dass die folgenden beiden Bedingungen gleichzeitig erfüllt sind: M2 ⊂ M1 und F2 > F1.

5. Vorrichtung nach Anspruch 4.
wobei die Auswerteeinheit (6) zur Bestimmung des Füllstandes des Mediums (2) in dem Behälter (3) ein Nutzechosignal, das den an der Oberfläche des Mediums (2) reflektierten Anteil des Messsignals repräsentiert, in bezog auf
ein systemabhängiges Referenzechosignal auswertet, wobei das systemabhängige Referenzechosignal den Anteil des Messsignals repräsentiert, der aufgrund von Reflexionen beim Übergang auf die Sendeeinheit (7) oder innerhalb der Sendeeinheit (7) auftritt.

6. Vorrichtung nach Anspruch 4 oder 5,
wobei die Auswerteeinheit (6) als ersten Messbereich (M1) den gesamten Messbereich wählt, wobei der gesamte Messbereich den Bereich zwischen dem minimalen Füllstand (*F*ₘᵢₙ) und dem maximalen Füllstand (*F*ₘₐₓ) des Mediums (2) in dem Behälter (3) umfasst, und
wobei die Auswerteeinheit (6) als zweiten Messbereich (M2) zumindest einen ausgewählten Bereich in der Umgebung des Nutz-Echosignals und/oder des Referenzechosignal heranzieht.

## Claims

1. Unit to determine the level of a medium (2) in a container using acoustic or electromagnetic measuring signals, where the unit comprises:
an ultrasonic sensor or a microwave sensor, a transmitter/receiver unit (7), an application unit (5), an evaluation unit (6), an interface (15) between the application unit (5) and the evaluation unit (6), a high-frequency module (38), a timing circuit (18), a gate circuit (19) and a control unit (20), where the transmitter/receiver unit (7) emits the measuring signals in the direction of the medium (2) and receives the measuring signals which are affected by the interaction with the medium , where the transmitter/receiver unit (7) and the high-frequency unit (38) - which is set up to generate high-frequency measuring signals and transform them to the low-frequency measuring range - are part of the application unit (5), where the timing circuit (18) and the gate circuit (19) are set up to transmit the transmission frequency and the transmission pulse duration to the application unit (5) via the interface (15) when the ultrasonic sensor is used, where the control unit (20) is set up to switch the high-frequency module (38) on and off digitally via the interface (15) when the microwave sensor is used, and where the evaluation unit (6) is designed in such a way that it determines the level of the medium (2) in the container using the measuring signals provided by the application unit (5) on the basis of a standardized evaluation algorithm.

2. Unit as per Claim 1,
where a communication unit (8), which is independent of the individual sensor (4) used, is provided to exchange data with a remote process control point (9).

3. Unit as per Claim 2,
where the communication unit (8) communicates with the process control point (9) via a serial bus (13) and
where the communication unit (8) is configured for data exchange via various transmission standards (10, 11, 12).

4. Unit as per 1,
where the evaluation unit (6) scans the measuring signals affected by the medium (2) within a first measuring range (M1) with a first scan frequency (F1), where the first scan frequency (F1) defines a first distance resolution (A1) of the measuring signals affected by the medium (2), and
where the evaluation unit (6) scans the measuring signals affected by the medium (2) within at least a second measuring range (M2) with a second scan frequency (F2),
where the second scan frequency (F2) corresponds to a second distance resolution (A2) of the measuring signals affected by the medium (2) and where the measuring ranges (M1, M2) and the scan frequencies (F1, F2) are selected in such a way that the following two conditions are met simultaneously: M2 ■ M1 and F2 > F1.

5. Unit as per Claim 4,
where the evaluation unit (6) uses an effective echo signal to determine the level of the medium (2) in the container (3), where said echo signal represents the part of the measuring signal reflected at the surface of the medium (2) and is evaluated in relation to a system-dependent reference echo signal, where the system-dependent reference echo signal represents the part of the measuring signal that occurs due to reflections when transitioning to the transmission unit (7) or within the transmission unit (7).

6. Unit as per Claim 4 or 5,
where the evaluation unit (6) selects the entire measuring range as the first measuring range (M1), where the entire measuring range comprises the range between the minimum level (Fₘᵢₙ) and the maximum level (Fₘₐₓ) of the medium (2) in the container (3), and
where the evaluation unit (6) uses at least a selected range in the area of the effective echo signal and/or the reference echo signal as the second measuring range (M2).

## Revendications

1. Dispositif destiné à la détermination d'un produit (2) dans un réservoir au moyen de signaux de mesure acoustiques ou électromagnétiques, le dispositif comprenant : un capteur à ultrasons ou un capteur à micro-ondes, une unité d'émission / de réception (7), une unité d'application (5), une unité d'exploitation (6), une interface (15) entre l'unité d'application (5) et l'unité d'exploitation (6), un module haute fréquence (38), un circuit temporisateur (18), un circuit porte (19) et une unité de commande (20), l'unité d'émission / de réception (7) émettant les signaux de mesure dans la direction du produit (2) et recevant les signaux de mesure influencés par l'interaction avec le produit (2), l'unité d'émission / de réception (7) et le module haute fréquence (38), qui est configuré en vue de générer des signaux de mesure haute fréquence et de les convertir dans la plage de mesure basse fréquence, font partie intégrante de l'unité d'application (5), le circuit temporisateur (18) et le circuit porte (19) étant configurés, en cas d'utilisation du capteur à ultrasons, en vue de transmettre la fréquence d'émission et la durée d'impulsion d'émission par l'intermédiaire de l'interface (15) à l'unité d'application (5), l'unité de commande (20) étant configurée, en cas d'utilisation du capteur à micro-ondes, en vue d'activer et de désactiver par voie numérique le module haute fréquence (38) par l'intermédiaire de l'interface (15), et l'unité d'exploitation (6) étant conçue de telle manière à déterminer le niveau de produit (2) dans le réservoir à l'aide des signaux de mesure délivrés par l'unité d'application (5) au moyen d'un algorithme d'exploitation uniforme.

2. Dispositif selon la revendication 1,
pour lequel est prévue une unité de communication (8), indépendante de chaque capteur (4) utilisé, destinée à l'échange de données avec une centrale de contrôle-commande (9) distante.

3. Dispositif selon la revendication 2,
pour lequel l'unité de communication (8) communique avec une centrale de contrôle-commande (9) par l'intermédiaire d'un bus série (13), et
l'unité de communication (8) étant configurée pour l'échange de données au moyen de différentes normes de transmission (10, 11, 12).

4. Dispositif selon la revendication 1,
pour lequel l'unité d'exploitation (6) échantillonne les signaux de mesures influencés par le produit (2), au sein d'une première plage de mesure (M1) avec une première fréquence d'échantillonnage (F1), la première fréquence d'échantillonnage (F1) définissant une première résolution de distance (A1) des signaux de mesure influencés par le produit (2), et
pour lequel l'unité d'exploitation (6) échantillonne les signaux de mesures influencés par le produit (2), au sein d'une deuxième plage de mesure (M2) avec une deuxième fréquence d'échantillonnage (F2), la deuxième fréquence d'échantillonnage (F2) correspondant à une deuxième résolution de distance (A2) des signaux de mesure influencés par le produit (2), et les plages de mesure (M1, M2) et les fréquences d'échantillonnage (F1, F2) étant sélectionnées de telle manière que les deux conditions suivantes sont remplies simultanément : M2 C M1 et F2 > F1.

5. Dispositif selon la revendication 4,
pour lequel l'unité d'exploitation (6) évalue, en vue de la détermination du niveau du produit (2) dans le réservoir (3), un signal d'écho utile, qui représente la part du signal de mesure réfléchie à la surface du produit (2), en référence à un signal d'écho de référence dépendant du système, le signal d'écho de référence dépendant du système représentant la part du signal de mesure, qui apparaît en raison de réflexions lors de la transition vers l'unité d'émission (7) ou au sein de l'unité d'émission (7).

6. Dispositif selon la revendication 4 ou 5,
pour lequel l'unité d'exploitation (6) sélectionne comme première plage de mesure (M1) la plage de mesure totale, la plage de mesure totale comprenant la plage entre le niveau minimum *(Fₘᵢₙ)* et le niveau maximum *(Fₘₐₓ)* du produit (2) dans le réservoir (3), et pour lequel l'unité d'exploitation (6) utilise comme deuxième plage de mesure (M2) au moins une plage sélectionnée dans l'environnement du signal d'écho utile et/ou du signal d'écho de référence.
